# EUROPEAN PATENT SPECIFICATION

(11) **EP 2 698 312 B1**
(45) Date of publication and mention of the grant of the patent: **12.02.2020**
(21) Application number: 12180579.0
(22) Date of filing: 15.08.2012
(51) Int. Cl.: B63B 35/79, B63H 9/06, F03D 5/00

(54) **Energy extraction using a kite**
Energieauszug unter Verwendung eines Drachens
Extraction d'énergie à l'aide d'un cerf-volant

(43) Date of publication of application: 19.02.2014
(73) Proprietor: Kite Power Systems Limited, Glasgow G2 2DQ (GB)
(72) Inventor: Hampton, William, Burnham-On-Crouch, Esssex CM0 8SH (GB)
(74) Representative: Jensen, Anders Damgaard

(56) References cited:
- US-A1- 2005 046 197
- US-A1- 2009 097 974

## Description

### Field of the Invention

The invention relates to the extraction of energy using kites. More particularly, but not exclusively, it relates to the extraction of energy from the wind locally on a kite to be used for controlling the kite.

### Background of the Invention

In the field of kite technology, it is known to use electrically operated devices aloft in the vicinity of the wing of a kite. For example, it is known to control a kite by using electrically driven servos, in the vicinity of the wing of the kite, to control aerodynamic controls coupled to the kite.

Providing such devices with power typically requires a power line running from the ground up to the kite. This adds complexity and weight to a kite system. It also introduces a vulnerability, as, if the power line is damaged, the devices can be left unpowered. This problem can become particularly pronounced in the case of larger, high flying kites, due to the length of power cabling required and the costs of repairing such systems should they become damaged. Furthermore, the issue of vulnerability can be made all the more significant if the electrical devices in question are normally involved in the control of a kite.

The invention was made in this context.

US 2009/097974 A1 relates to a system for converting energy comprising at least one power wing profile which can be driven from the ground and a basic platform for controlling the wing profile and generating electric energy placed at ground level and connected through two ropes to the power wing profile.

Document US 2005/046197 A1 is considered as the closest prior art and discloses the preamble of claim 1.

### Summary of the Invention

According to a first aspect of the invention, there is provided apparatus for a kite, comprising: a control arrangement comprising at least one aerodynamic control element in, or coupled to, the kite for aerodynamically controlling at least aspects of the flight of the kite, a tether connector for connecting the kite to a tether; and an energy extraction arrangement comprising a mechanical coupling to a wing of the kite and a generator, wherein the control arrangement is configured to control the wing so as to cause an alternating movement of the mechanical coupling to the wing with respect to the tether connector and the generator is configured to extract energy from said alternating movement, wherein the control arrangement is configured to control the kite to cause an alternating movement of the wing of the kite with respect to the tether connector so as to cause the alternating movement of the mechanical coupling.

This aspect of the invention provides an apparatus for extracting energy from the wind locally at the kite.

The at least one aerodynamic control element may comprise an element for changing the shape of the wing.

The at least one element for changing the shape of the wing may comprise a control line coupled to the wing or an actuator within or on the wing.

Alternatively, the at least one aerodynamic control element may comprise an aerodynamic control surface.

The at least one aerodynamic control surface may comprise a spoiler or may comprise two complimentary elevon control surfaces or two complimentary aileron control surfaces.

Alternatively, the at least one aerodynamic control element may comprise a drag device.

The mechanical coupling may comprise at least one control line coupled to the wing of the kite.

The control arrangement may comprise a first control arrangement and the apparatus may further comprise a second control arrangement configured to independently control the flight of the kite, wherein the second control arrangement comprises means for engaging with the mechanical coupling to exert a mechanical force on the mechanical coupling so as to control the flight of the kite.

The means for engaging may comprise the generator and the mechanical force exerted on the mechanical coupling may be the resistance to the alternating movement of the mechanical coupling provided by the generator.

Alternatively, the means for engaging may comprise a motor.

As a further alternative, the apparatus may comprise a motor/generator, the motor/generator providing the generator of the energy extraction arrangement and also the means for engaging.

The apparatus may further comprise an energy storage arrangement configured to store the energy extracted by said energy extraction arrangement and configured to power the control arrangement using the stored energy. In embodiments where the apparatus comprises a second control arrangement, the energy storage may be configured to also power the second control arrangement.

The apparatus may further comprise a controller for controlling the control arrangement and the energy extraction arrangement and a sensor arrangement local to the wing of the kite for gathering information relevant to the flight of the kite for use by the controller.

The apparatus may further comprise a support structure, wherein the mechanical coupling to the wing comprises a rolling belt connected at either end to a main load line of the kite, the generator is connected to the support structure and comprises a rolling belt gear which is coupled to the rolling belt and the tether connector is configured to connect the support structure to the tether.

According to a second aspect of the invention, there is provided a kite comprising: an apparatus according to the first aspect of the invention.

According to a third aspect of the invention, there is provided a method for controlling a kite comprising a wing in order to extract energy from the wind locally at the kite using an apparatus comprising: a control arrangement comprising at least one aerodynamic control element in, or coupled to, the kite for aerodynamically controlling at least aspects of the flight of the kite, a tether connector for connecting the kite to a tether; and an energy extraction arrangement comprising a mechanical coupling to the wing and a generator, the method comprising: operating the control arrangement to control the wing so as to cause an alternating movement of the mechanical coupling to the wing relative to the tether connector, and extracting energy, using the generator, from the alternating movement of the mechanical coupling to the wing relative to the tether connector.

This aspect of the invention provides a method for extracting energy from the wind locally at the kite.

According to the third aspect of the invention, the apparatus may further comprise an energy storage and the method may further comprise: storing the extracted energy, and using the stored energy to control the flight of the kite.

The control arrangement may provide a first control arrangement and the apparatus may further comprise a second control arrangement, configured to independently control at least aspects of the flight of the wing of the kite, comprising means for engaging with the mechanical coupling, and the method may further comprise: manipulating, using the means for engaging of the second control arrangement, the mechanical coupling to move relative to the tether connector so as to control the flight of the kite.

The apparatus may comprise a motor/generator providing said means for engaging and said generator, and the method may comprise selectively operating the motor/generator as the means for engaging to mechanically manipulate the mechanical coupling to move relative to the tether connector or as a generator for extracting energy from the alternating movement of the mechanical coupling relative to the tether connector when the first control arrangement is used to control at least aspects of the flight of the kite.

According to a fourth aspect of the invention, there is provided a computer program comprising instructions that when executed by a controller cause the controller to carry out the method of the third aspect of the invention.

### Brief Description of the Drawings

Embodiments of the invention will now be described, by way of example, with reference to the accompanying drawings, in which:
Figure 1 is a schematic diagram of a system including a kite;
Figure 2 illustrates in more detail the components of the system which are used for controlling the kite and for locally generating and storing electricity according to a first embodiment;
Figure 3 is a schematic diagram illustrating, by way of example only, various components of the system of Figure 1; and
Figure 4 illustrates a process for controlling the apparatus of Figure 2 in order to generate electricity.

### Detailed Description

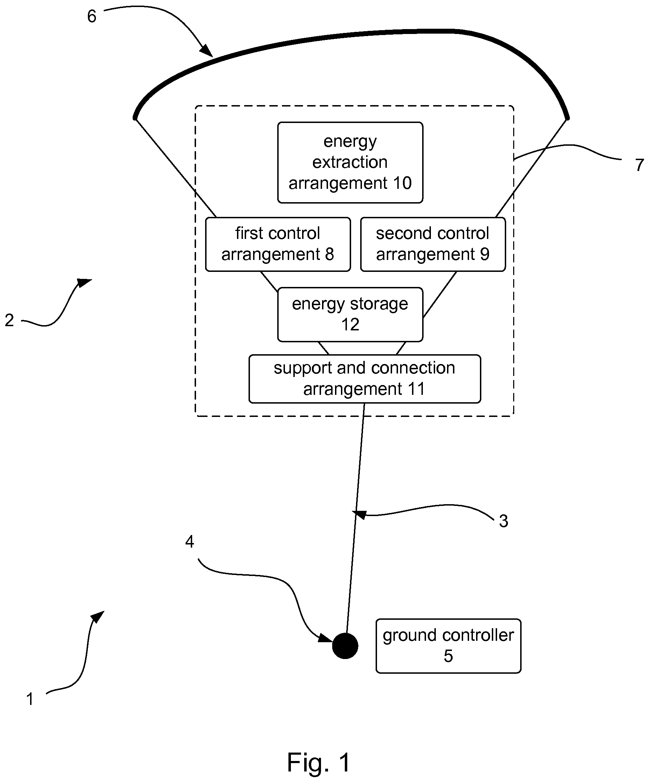

With respect to Figure 1, a system 1 is shown comprising a kite 2, a tether 3, an anchorage 4 and a ground controller 5.

The kite 2 comprises a wing 6 and a local arrangement 7. For example, the wing 6 may comprise a leading edge inflatable (LEI) traction kite wing, capable of generating large amounts of lift from the wind.

A first end of the tether 3 is attached to the anchorage 4, which lies below the kite 2, and the second end of the tether 3 is connected to the kite 2. The wing 6 is therefore tethered to the anchorage 4 via the tether 3. Thus, lift generated by the wing 6 can be resisted by the anchorage 4 via the tether. For example, the kite may comprise a number of kite lines attached to different points on the wing 6 and coming together at a single point, under the wing, to which the second end of the tether 3 is attached, and the anchorage 4 may comprise a winch to which a first end of the tether is attached and onto which a length of the tether can be wound and unwound.

The system 1 may be used to perform mechanical work on the ground, for instance to drive a generator, using the lift forces generated by the kite 2 in the wind. Alternatively, the system 1 may for example be used to tow a ship, again using lift generated by the kite 2.

The ground controller 5 can control the local arrangement 7, which is configured to control the flight of the kite 2 and which can be used to extract energy locally from the movement of the kite. This energy can be used to provide the power required by the local arrangement 7 to control the flight of the kite 2.

The local arrangement 7 comprises a first control arrangement 8, a second control arrangement 9, an energy extraction arrangement 10, a support and connection arrangement 11, and an energy storage 12. All of these components are located local to the wing 6 and the second end of the tether 3. The support and connection arrangement 11 comprises connection means for connecting the kite 2 to the tether 3. With regard to Figure 1, the local arrangement 7 is depicted schematically only, as are its first control arrangement 8, second control arrangement 9, energy extraction arrangement 10, the support and connection arrangement 11 and energy storage 12. The depicted locations of the first and the second control arrangements 8, 9, the energy extraction arrangement 10 and the energy storage 12 relative to the structure of the kite 2 are therefore only a schematic illustration. Moreover, some of the components of the system 1 can form part of more than one of the first control arrangement 8, second control arrangement 9 and energy extraction arrangement 10 as will be described in more detail below. In some embodiments, the local arrangement 7 does not include a second control arrangement 9.

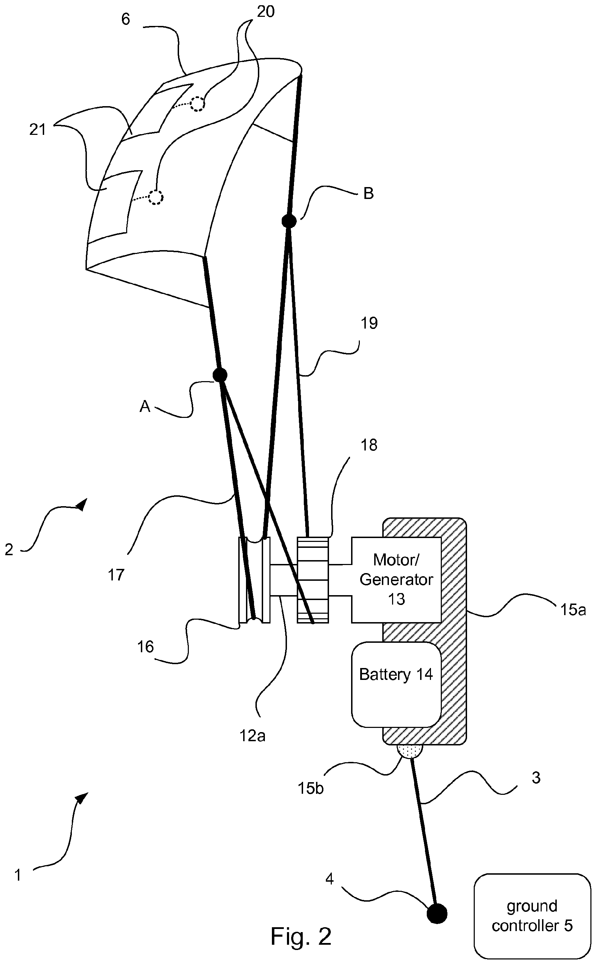

The first control arrangement 8 is capable of aerodynamically controlling the wing 6 of the kite 2 in roll by varying the distribution of aerodynamic loads on the wing using aerodynamic control means. For example, the first control arrangement 8 may comprise aerodynamic control elements, attached to the wing 6 of the kite 2, and control servos mounted within the wing of the kite and coupled to the control elements. In such examples the control servos are capable of controlling the control elements, as will be described in more detail with respect to Figure 2.

The second control arrangement 9 comprises a mechanical coupling to the wing 6 of the kite 2 and is capable of forcibly controlling the movement of the wing of the kite about its longitudinal axis of flight as will be described in more detail with respect to Figure 2. In other words, the second control arrangement 9 can mechanically manipulate the wing 6 of the kite 2 in roll. For example, the second control arrangement 9 may comprise an electric motor, connected to the structure of the kite 2 below the wing of the kite, and control lines running from the electric motor to the wing 6. The electric motor is configured to manipulate control lines in order to forcibly roll the wing, as will also be described in more detail with respect to Figure 2.

The energy extraction arrangement 10 is configured to generate electricity from the movement of the wing 6 of the kite 2 relative to the tether 3 and the connection means for connecting to the tether. The first control arrangement 8 can be used to control the wing 6 to cause an alternating movement of a mechanical coupling to the wing with respect to the connection means forming part of the support and connection arrangement 11. The first control arrangement 8 can be operated to roll the wing 6 back and forth in a rocking motion, thereby causing the alternating movement of the mechanical coupling with respect to the connection means for connecting to the tether 3.

The energy storage 12 is capable of storing energy, including that generated by the energy extraction arrangement 10, and is capable of powering the first and second control arrangements 8, 9 using the stored energy. The energy extraction arrangement 10 and the energy storage 12 will also be described in more detail with respect to Figure 2.

The ground controller 5 interfaces with and is configured to control the first and second control arrangements 8, 9 and the energy extraction arrangement 10. For example, the ground controller 5 may comprise a computer configured to wirelessly interface with the first and second control arrangements 8, 9 and the energy extraction arrangement 10.

With respect to Figure 2, the local arrangement 7, comprising the first control arrangement 8, second control arrangement 9, energy extraction arrangement 10, support arrangement 11 and energy storage 12, of the system 1 of Figure 1, is shown in more detail, forming an apparatus for controlling the wing 6 of the kite 2 and for locally extracting and storing energy from the wing's movements. The apparatus comprises a motor/generator 13, a battery 14, a support member 15a, a tether connector 15b, a main load pulley 16, a main load line 17, a rolling belt gear 18, a rolling belt 19, control servos 20 and aerodynamic control elements 21.

As will be described in more detail below, the motor/generator 13, when operated as a motor, together with the rolling belt gear 18, rolling belt 19 and main load line 17 form the second control arrangement 9; the control servos 20 and control surfaces 20 form the first control arrangement 8; the motor/generator 13, when operated as a generator, together with the rolling belt gear 18 and the rolling belt 19 form the energy extraction arrangement 10; the support member 15a and the tether connector 15b form the support and connection arrangement 11 and the battery 14 forms the energy storage 12.

The motor/generator 13 comprises a drive shaft 12a, and, when provided with electrical power, is operable to rotate the drive shaft. Furthermore, the motor/generator 13 is also operable to allow the drive shaft 12a to be rotated by other means and of generating electricity from this rotation. The motor/generator 13 is therefore capable of being operated either in a motor mode or in a generator mode. For example the motor/generator 13 may comprise an electric motor which is capable of being operated in reverse, as an electrical generator.

The battery 14 is electrically connected to the motor/generator 13 and control servos 20. The battery 14 can provide power to the motor/generator 13 and control servos. The battery 14 is also rechargeable and is recharged by electricity generated by the motor/generator 13. The battery 14 therefore forms the energy storage 12 of Figure 1.

The support member 15a connects the motor/generator 13 and the battery 14 and is located below the wing 6 of the kite 2. The support member 15a may also be configured to maintain the correct orientation of the motor/generator 13 relative to the wing 6 of the kite 2. For example, the support member 15a may be a metal mounting plate to which both the motor/generator 13 and the battery 14 are attached. Furthermore, the support member 15a may, for example comprise a pod encapsulating a number of the components of the local arrangement 7. The tether connector 15b can be any means for connecting the tether 3 to the kite 2. For example, the tether connector 15b may comprise a number of connection lines connecting the support member 15a to the tether 3, as shown in Figure 2. Alternatively, it can comprise a rigid structure to which the second end of the tether 3 can be attached and which will move with the second end of the tether. For example, the tether connector 15b may comprise a socket termination at the second end of the tether 3. An interlinking part of the support member 15a may be fitted through the socket termination. As such, the socket termination, and with it the second end of the tether, is able to pivot about the interlinking part. In one example, the tether 3 may comprise stainless steel rope, the socket termination may comprise a resin poured socket termination and the interlinking part of the support member 15a may comprise a stainless steel loop protruding away from rest of the support member 15a.

The main load pulley 16 is coaxially located on the drive shaft 12a of the motor/generator 13 and is configured to rotate freely about the drive shaft.

The rolling belt gear 18 is coaxially fixed to the drive shaft 12a of the motor/generator 13 at a different location on the drive shaft to that of the main load pulley 16. The rolling belt gear 18 therefore rotates with the drive shaft 12a.

The main load line 17 comprises a cord. For example, the main load line 17 may comprise rope made from synthetic fibres, for instance Dyneema. A first end of the main load line 17 is attached to a first end of the wing 6 of the kite 2 in the spanwise direction of the wing. The second end of the main load line 17 is attached to the second end of the wing 6 of the kite 2. Between its two ends, the main load line 17 passes under the underside of the main load pulley 16, and is therefore free to move over the pulley. Consequently, lift generated by the wing 6 of the kite 2 creates tension in the main load line 17 which is primarily resisted at the main load pulley 16.

The rolling belt 19 is a toothed belt which interlocks with the matching teeth of the rolling belt gear 18 as it passes under the underside of the rolling belt gear. A first end of the rolling belt 19 lies to the same side of the drive shaft 12a as the first end of the main load line 17, and is connected to the main load line at a first point A located between the first end of the main load and the portion of the main load line 17 which will interact with the main load pulley 16. The second end of the rolling belt 19 is connected to a corresponding second point B on the main load line 17, on the other side of the drive shaft 12a.

As described with reference to Figure 1, the first end of the tether 3 is attached to the anchorage 4. The second end of the tether is attached to the support member 15a via the tether connector 15b. For example, the tether 3 may comprise stainless steel wire rope. Furthermore, the anchorage 4 may, for example, comprise a drum onto which a length of the tether 3 can be wound and unwound. The lift generated by the wing 6 of the kite 2 is therefore resisted by the anchorage 4, mainly via a load path comprising the main load line 17, the main load pulley 16, the motor/generator 13, the support member 15a and tether connector 15b and the tether 3.

The aerodynamic control elements 21 can be used to aerodynamically control the flight of the wing 6 of the kite 2 by manipulating the aerodynamic loads experienced by the wing. For example, the control elements 21 may comprise spoilers located towards either end of the upper surface of the wing 6 of the kite 2 which, through their differential deployment, could affect a rolling moment on the wing 6 of the kite 2 by disrupting the lift generating airflow over one end of the wing 6.

The control servos 20 are configured to control the control elements 21 and are powered by the battery 14. For example, the control servos 20 may be electrical linear position control servomechanisms coupled to the control elements 21 and mounted internally within the wing 6 of the kite 2.

The control servos 20 and control elements 21 therefore form the first control arrangement 8 of the kite 2.

If the motor/generator 13 is used to rotate the drive shaft 12a, the portion of the rolling belt 19 on the down-going side of the rolling belt gear 18 will be drawn downwards. Due to the attachment of the ends of the rolling belt 19 to the main load line 17, the main load line will move with the rolling belt 19. The end of the wing 6 of the kite 2 to which the down-going portion of main load line 17 is attached will therefore be forced to descend. Conversely, the other end of the wing 6 will be allowed to ascend. The motor/generator 13, when powered by the battery 14, is therefore capable of forcibly rolling the wing 6 of the kite 2. Consequently, the motor/generator 13, rolling belt gear 18, rolling belt 19 and main load line 17 form the second control arrangement 9 of the kite.

If the first control arrangement 8 is used to generate an aerodynamic rolling moment on the wing 6 of the kite 2, this will exert a corresponding torque on the rolling belt gear 18 via the main load line 17 and rolling belt 19. Consequently the rolling belt gear 18 and the rolling belt 19 will alternate between moving one way and the other. By operating the motor/generator 13 in generator mode and allowing the alternating movement of the rolling belt 19 to rotate the drive shaft 12a of the motor/generator 13, electricity is generated by the motor/generator from the rotation of the drive shaft. This energy can then be used to recharge the battery 14. The motor/generator 13, when operated as a generator, the rolling belt 19 and the rolling belt gear 18, therefore forms the energy extraction arrangement 10. It will however be appreciated that, as previously described, the motor/generator 13 also forms part of the second control arrangement 9, when it is operated as a motor, together with the rolling belt gear 18 and the rolling belt 19.

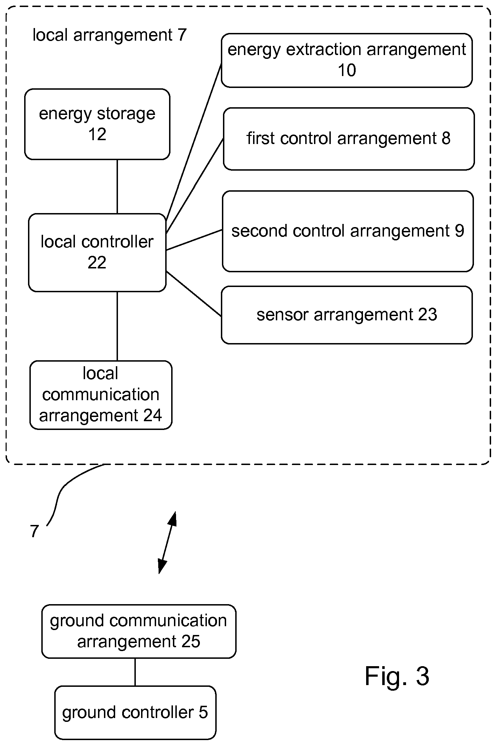

The ground controller 5 is configured to wirelessly interface with and control the motor/generator 13 and control servos 20. The ground controller 5 is therefore capable of wirelessly interfacing with and controlling the first and second control arrangements 8 & 9 and the energy extraction arrangement 10. For example, the ground controller may comprise a computer processor connected to radio frequency (RF) communication means, wherein the computer is capable of interfacing with the motor/generator 13 and control servos 20 via the RF communication means. To this end, the kite 2 may also include RF communication means (not shown in Figure 2) for receiving the signals from the ground controller and forwarding instructions to the motor/generator 12 and the control servos 19. In some embodiments, the local arrangement 7 may comprise a local controller (not shown in Figure 2) for controlling the components of the first and second control arrangement 8, 9 and the energy storage 12, as will be further described with reference to Figure 3. The kite may also comprise a plurality of sensors located in the vicinity of the wing 6 of the kite 2 configured to determine parameters relevant to the flight of the kite, such as air speed, altitude and GPS location. For example, information gathered by the sensors may be transmitted to the ground controller 5 via an RF communication means of the kite and used by the ground controller to control the kite accordingly. Alternatively or additionally, in the embodiments wherein the kite has a local controller, the local controller may control the kite based on the information received from the sensors.

Figure 3 is a schematic illustration showing, by way of example only, how the control arrangement and the energy extraction arrangement can be connected to a local controller and a sensor arrangement and how the local controller can communicate with a ground controller. As shown in Figure 3, the local arrangement 7 may comprise a local controller 22 connected to the energy extraction arrangement 10 and the control arrangements 8 and 9. The local controller 22 may also be connected to a sensor arrangement 23 comprising a plurality of sensors as have been described hereinbefore and may receive information from the sensor arrangement and control the kite based on the information from the sensor arrangement. The local controller 24 may communicate with the ground controller 5 via a local communication arrangement 24 and a ground communication arrangement 25, comprising, for example, respective RF communication means or other wireless communication means. For example, the local controller 24 may be configured to receive control signals from the ground controller 5 for controlling the first and second control arrangements 8, 9 via the local and ground communication arrangements 24, 23. Accordingly, the ground controller 5 may be configured to interface with and control the first control arrangement 8, second control arrangement 9, and energy extraction arrangement 10 via the local controller 22. The local controller 22 may be powered by the energy storage 12.

A method of controlling the components of the apparatus of Figure 2 in order to generate electricity will now be described with respect to Figure 3. The method will be described as being carried out by the ground controller 5 but the method can alternatively be carried out in a controller in the local arrangement 7. Alternatively, it may be carried out partly by a ground controller 5 and partly somewhere else, such as by the local arrangement 7. The steps of the method can be implemented as a set of instructions stored as a computer program which when executed by one or more controllers cause the one or more controllers to carry out the method.

At step 4.1, the ground controller 5 calculates the control commands for the first control arrangement 8 required to command the control servos 20 to control the control elements 21 such that the wing 6 of the kite 2 will be caused to alternate between rolling one way and then the other. For example, the ground controller 5 may use information concerning the flight of the kite, for instance information on the wing's location, orientation and air speed, to determine the control commands necessary to affect the desired wing manoeuvres. The information concerning the flight of the wing 6 of the kite 2 may, for example, be provided by sensors mounted on the wing, and in wireless communication with the ground controller 5, as has been described earlier.

The ground controller 5 would then transmit the calculated control commands to the control servos 20, which would control the control elements 21 accordingly at step 4.2, causing the wing 6 of the kite 2 to roll back and forth.

At step 4.3, the ground controller 5 would then transmit an instruction instructing the energy extraction arrangement 10 to begin operating. It will be realised that this step may alternatively be carried out before step 4.2. The motor/generator 13 would then start to operate in generator mode, allowing its drive shaft 12a to be rotated by the alternating movement of the rolling belt 19 with the wing 6 of the kite 2, and would begin to generate electricity at step 4.4 from the resulting rotation of the drive shaft.

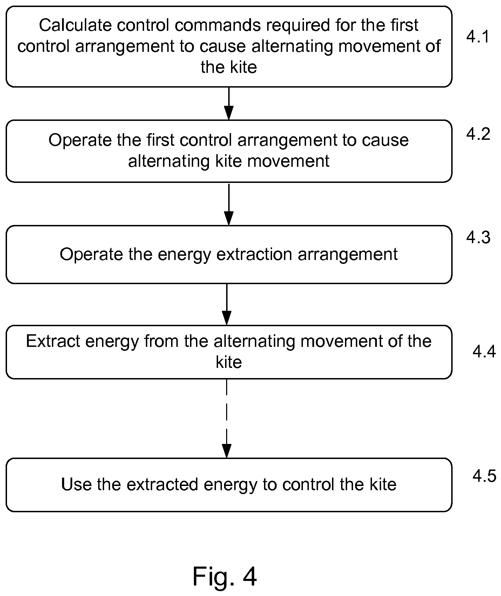

The generated electricity may be stored in the battery 14 to power the first or second control arrangement 9 at step 4.5 at a later time. Some time may be elapsed between the time the energy is stored and the energy is used to power the kite 2, and this extended delay is schematically illustrated in Figure 4 by a dashed line. Alternatively, the extracted energy can also be used immediately. For example, the energy extracted from the movement of the wing 6 when the kite 2 is controlled by the first control arrangement 8 may be used to directly power the first control arrangement 8. The extracted energy may also be used to power other electrical systems associated with the kite, for instance the sensor arrangement 23, local controller 23 and local communication arrangement 24 previously described. Alternatively or additionally, extracted energy may be transmitted wirelessly or by wire to ground and used to power a separate system.

Whilst specific examples of the invention have been described, the scope of the invention is defined by the appended claims and not limited to the examples. The invention could therefore be implemented in other ways, as would be appreciated by those skilled in the art.

With reference to the apparatus of Figure 2, as opposed to a motor/generator 13 which, when operated in different modes, forms part of both the second control arrangement 9 and the energy extraction means 10, alternatively the second control arrangement 9 of the apparatus could comprise a motor and the energy extraction arrangement 10 could comprise a generator separate from the motor. In this case, the generator and the motor may each, separately, be coupled in some manner to the mechanical coupling to the wing 6 of the kite 2. For example, the generator and motor may each be separately attached to the support member 15a and may each comprise a drive shaft which is geared to the rolling belt 19. Alternatively, the generator and the motor could be selectively coupled to the same drive shaft. The generator would extract energy from the movement of the rolling belt 19 via its drive shaft.

Moreover, the main load pulley 16 may, for example, not be located on the drive shaft of the motor/generator 13 and may instead be supported in some other way by the support member 15a. For instance, the drive shaft of the motor/generator 13 may be hollow and the main load pulley 16 may be located on an axle coaxially located within the drive shaft. The main load pulley 16 and the rolling belt gear 18 may be coaxial and have the same radii. In this way, the rolling belt 19 and the main load line 17 are aligned and move in unison from the perspective of the motor/generator 13. Alternatively, the rolling belt 19 and the main load line 17 may be aligned and move in unison from the perspective of the motor/generator 13 as a result of some other arrangement, for instance involving one main load pulley 16 and two rolling belt gears 18. In other embodiments, the main load pulley 16 is located on an axle located elsewhere on the support member 15a such that the main load pulley is not coaxial with the rolling belt gear 18.

Furthermore, the rolling belt gear 18 and rolling belt may comprise any type of pulley or gear and belt or chain respectively which, in combination, are capable of transmitting power between the motor/generator 13 and the main load line 17. Alternatively, the function of transmitting power between the motor/generator 13 and the main load line 17 may instead be provided by some form of mechanical linkage other than the pulley/gear and belt/chain configuration described.

Moreover, the control elements 21 could, for example, alternatively or additionally comprise pure drag devices located on the under surface of the wing 6 of the kite 2, elevons or ailerons located at the trailing edge of the wing 6, wing warping means or controlled aerodynamic devices trailed behind the wing in flight or attached to the control lines of the kite 2. For example, wing warping means may comprise a control line coupled to the wing 6, or an actuator within or on the wing 6, for altering the shape of the wing 6.

With regard to the control servos 20, other arrangements to those described are conceived, for instance the control servos may be mounted at locations along the main load line 17, or on the support member 15a, and may control the control elements 21 via control lines running from the control servos 20 to the control elements 21.

Although a battery 14 has been described, it will be realised that the energy storage 12 could be provided by other means, for example a super capacitor. Furthermore, and alternatively, it will be understood that if the extracted energy is used directly to power another system, the local arrangement 7 does not need to include an energy storage 12 for storing energy extracted from the movement of the kite 2.

Further still, although the above description describes embodiments in which the first and second control arrangements 8, 9 are configured to control the wing 6 of the kite 2 in roll and in which the energy extraction arrangement 10 is configured to extract energy from the an alternating movement of the mechanical coupling to the wing 6 with respect to the tether connector 15b when the first control arrangement 8 is used to cause the wing 6 to alternate between rolling one way and then the other, other embodiments which involve movement of the wing 6 about other axes, or movement of the wing 6 in roll as well as movement about other axes, are possible. For example, the first and second control arrangements 8, 9 may be configured to control the wing 6 of the kite 2 in pitch and/or yaw and the energy extraction means could be configured to extract energy from the an alternating movement of a mechanical coupling to the wing 6 with respect to a tether connector 15b of the kite when the first control arrangement 8 is used to cause the wing 6 to alternate between pitching and/or yawing one way and then the other.

Although it has been described that the local arrangement 7 includes a motor for exerting a force on the mechanical coupling to the wing 6 for controlling the flight of the kite 2, the local arrangement 7 may not include a motor. Instead, the second control arrangement 9 may only influence the movement of the kite 2 by using the generator to resist the movement of the control lines. In other embodiments, the local arrangement 7 may not include a second control arrangement 9 at all and the flight of the kite 2 may be solely controlled by the first control arrangement 8.

## Claims

1. Apparatus (1) for a kite, comprising:
a control arrangement comprising at least one aerodynamic control element (20, 21) in, or coupled to, the kite for aerodynamically controlling at least aspects of the flight of the kite;
a tether connector (15b) for connecting the kite to a tether (3); and
an energy extraction arrangement (10) comprising a mechanical coupling to a wing (6) of the kite and a generator (13), wherein the control arrangement is configured to control the wing so as to cause an alternating movement of the mechanical coupling to the wing with respect to the tether connector and the generator is configured to extract energy from said alternating movement,
**characterized in that** the control arrangement is configured to control the kite to cause an alternating movement of the wing of the kite with respect to the tether connector so as to cause the alternating movement of the mechanical coupling.

2. Apparatus according to claim 1, wherein the at least one aerodynamic control element comprises an element for changing the shape of the wing and/or an aerodynamic control surface and/or a drag device.

3. Apparatus according to any one of the preceding claims, wherein the control arrangement comprises a first control arrangement (8) and the apparatus further comprising a second control arrangement (9) configured to independently control the flight of the kite, wherein the second control arrangement comprises means (13) for engaging with the mechanical coupling to exert a mechanical force on the mechanical coupling so as to control the flight of the kite.

4. Apparatus for a kite according to claim 3, wherein the means for engaging comprises the generator and the mechanical force exerted on the mechanical coupling is the resistance to the alternating movement of the mechanical coupling provided by the generator.

5. Apparatus according to claim 3, wherein the means for engaging comprises a motor (13).

6. Apparatus according to claims 3 or 5, wherein the apparatus comprises a motor/generator (13), the motor/generator providing the generator of the energy extraction arrangement and also the means for engaging.

7. Apparatus for a kite according to any one of the preceding claims, further comprising an energy storage arrangement (14) configured to store the energy extracted by said energy extraction arrangement and configured to power the control arrangement using the stored energy.

8. Apparatus according to any one of the preceding claims, further comprising a controller (15) for controlling the control arrangement and the energy extraction arrangement and a sensor arrangement local to the wing of the kite for gathering information relevant to the flight of the kite for use by the controller.

9. A kite comprising:
an apparatus according to any one of the preceding claims; and
a wing (6).

10. A method for controlling a kite comprising a wing (6) in order to extract energy from the wind locally at the kite using an apparatus (1) comprising:
a control arrangement comprising at least one aerodynamic control element (20, 21) in, or coupled to, the kite for aerodynamically controlling at least aspects of the flight of the kite;
a tether connector (15b) for connecting the kite to a tether (3); and
an energy extraction arrangement comprising a mechanical coupling to the wing and a generator (13), the method comprising:
operating the control arrangement to control the wing so as to cause an alternating movement of the mechanical coupling to the wing relative to the tether connector, and
extracting energy, using the generator, from the alternating movement of the mechanical coupling to the wing relative to the tether connector.

11. A method according to claim 10, wherein the system further comprises an energy storage (14) and the method further comprising:
storing the extracted energy, and
using the stored energy to control the flight of the kite.

12. A method according to claim 11, wherein the control arrangement provides a first control arrangement (8) and the apparatus further comprises a second control arrangement (9), configured to independently control at least aspects of the flight of the wing of the kite, comprising means for engaging with the mechanical coupling, wherein the method further comprises:
manipulating, using the means for engaging of the second control arrangement, the mechanical coupling to move relative to the tether connector so as to control the flight of the kite.

13. A method according to claim 12, wherein the apparatus comprises a motor/generator providing said means for engaging and said generator, and wherein the method comprises selectively operating the motor/generator as the means for engaging to mechanically manipulate the mechanical coupling to move relative to the tether connector or as a generator for extracting energy from the alternating movement of the mechanical coupling relative to the tether connector when the first control arrangement is used to control at least aspects of the flight of the kite.

14. A computer program comprising instructions that when executed by a controller cause the controller to carry out the method of any one of claims 10 to 13.

## Patentansprüche

1. Vorrichtung (1) für einen Drachen, das Folgende umfassend:
eine Steuerungsanordnung mit mindestens einem aerodynamischen Steuerelement (20, 21) im
oder an den Drachen gekoppelt, zur aerodynamischen Steuerung von zumindest Teilen des Drachenflugs;
eine Seilhalterung (15b) zur Verbindung des Drachens mit einem Halteseil (3); und
eine Energiegewinnungsanordnung (10), die eine mechanische Kopplung an einen Flügel (6) des Drachens und einen Generator (13) umfasst, wobei die Steuerungsanordnung so konfiguriert ist, dass sie den Flügel derart steuert, dass eine Wechselbewegung der mechanischen Kopplung mit dem Flügel im Verhältnis zur Seilhalterung bewirkt wird, und der Generator derart konfiguriert ist, dass er Energie aus dieser Wechselbewegung gewinnt,
**dadurch gekennzeichnet, dass**
die Steuerungsanordnung so konfiguriert ist, dass der Drachen so gesteuert wird, dass er eine Wechselbewegung des Drachenflügels im Verhältnis zur Seilhalterung bewirkt, was zur Wechselbewegung der mechanischen Kopplung führt.

2. Vorrichtung nach Anspruch 1, **dadurch gekennzeichnet, dass** das mindestens eine aerodynamische Steuerelement ein Element zur Änderung der Flügelform und/oder eine aerodynamische Steuerfläche und/oder eine Schleppvorrichtung umfasst.

3. Gerät nach einem der vorhergehenden Ansprüche, bei dem die Steuerungsanordnung eine erste Steuerungsanordnung umfasst (8) und die Vorrichtung ferner eine zweite Steuerungsanordnung (9) umfasst, die so konfiguriert ist, dass sie den Flug des Drachens unabhängig steuert, wobei die zweite Steuerungsanordnung Eingriffsmittel (13)
in die mechanische Kopplung umfasst, damit zur Steuerung des Drachenflugs eine mechanische Kraft auf die mechanische Kopplung ausgeübt wird.

4. Vorrichtung für einen Drachen nach Anspruch 3, bei der das Eingriffsmittel den Generator umfasst und der Widerstand gegen die Wechselbewegung der vom Generator bereitgestellten mechanischen Kopplung die auf die mechanische Kopplung ausgeübte mechanische Kraft ist.

5. Vorrichtung nach Anspruch 3, wobei das Eingriffsmittel einen Motor (13) umfasst.

6. Vorrichtung nach Anspruch 3 oder 5, wobei die Vorrichtung einen Motor/Generator (13) umfasst und der Motor/Generator den Generator der Energiegewinnungsanordnung sowie das Eingriffsmittel darstellt.

7. Vorrichtung für einen Drachen nach einem der vorhergehenden Ansprüche, ferner mit einer Energiespeicheranordnung (14), die zum Speichern der mit der Energiegewinnungsanordnung gewonnenen Energie und zum Antrieb der Steuerungsanordnung unter Verwendung der gespeicherten Energie konfiguriert ist.

8. Vorrichtung nach einem der vorhergehenden Ansprüche, ferner einen Regeler (15) zum Regeln der Steuerungsanordnung und der Energiegewinnungsanordnung sowie eine Sensoranordnung lokal am Flügel des Drachens zur Erfassung der für den Drachenflug relevanten Informationen zur Verwendung durch den Regler umfassend.

9. Drachen, bestehend aus Folgenden:
einer Vorrichtung nach einem der vorhergehenden Ansprüche; und einem Flügel (6).

10. Verfahren zum Steuern eines Drachens, umfassend einen Flügel (6), zur Gewinnung von Energie lokal am Drachen aus dem Wind, unter Verwendung einer
Vorrichtung (1), Folgendes umfassend:
eine Steuerungsanordnung mit mindestens einem aerodynamischen Steuerelement (20, 21) im oder an den Drachen gekoppelt, zur aerodynamischen Steuerung von zumindest Teilen des Drachenflugs;
eine Seilhalterung (15b) zur Verbindung des Drachens mit einem Halteseil (3); und
eine Energiegewinnungsanordnung, die eine mechanische Kopplung mit dem Flügel und einem Generator (13) umfasst, wobei das Verfahren Folgendes umfasst:
Betätigen der Steuerungsanordnung zum Steuern des Flügels zur Herbeiführung einer Wechselbewegung der mechanischen Kopplung mit dem Flügel im Verhältnis zur Seilhalterung, und
Gewinnung von Energie aus der Wechselbewegung der mechanischen Kopplung mit dem Flügel im Verhältnis zur Seilhalterung unter Verwendung des Generators.

11. Verfahren nach Anspruch 10, wobei das System ferner einen Energiespeicher (14) umfasst und das Verfahren ferner Folgendes umfasst:
Speicherung der gewonnenen Energie und
Verwendung der gespeicherten Energie zur Steuerung des Drachenflugs.

12. Verfahren nach Anspruch 11, wobei die Steuerungsanordnung eine erste Steuerungsanordnung (8) bereitstellt und die Vorrichtung ferner eine zweite Steuerungsanordnung (9) umfasst, die so konfiguriert ist,
dass sie zumindest Teile des Flugs des Drachenflügels unabhängig steuert, Eingriffsmittel in die mechanische Kopplung umfassend, wobei das Verfahren ferner Folgendes umfasst:
Betätigung der mechanischen Kopplung unter Verwendung der Eingriffsmittel der zweiten Steuerungsanordnung damit sie sich zur Steuerung des Drachenflugs im Verhältnis zur Seilhalterung bewegt.

13. Verfahren nach Anspruch 12, wobei die Vorrichtung einen Motor/Generator umfasst, der das Eingriffsmittel und den Generator darstellt, und wobei das Verfahren den selektiven Betrieb des Motors/Generators als das Eingriffsmittel zur mechanischen Betätigung der mechanischen Kopplung, damit diese sich im Verhältnis zur Seilhalterung bewegt, umfasst oder als Generator zur Gewinnung von Energie aus der Wechselbewegung der mechanischen Kopplung im Verhältnis zur Seilhalterung, wenn die erste Steuerungsanordnung zur Steuerung von zumindest Teilen des Drachenflugs verwendet wird.

14. Computerprogramm mit Anweisungen, das, wenn es von einem Regler ausgeführt wird, dafür sorgt, dass der Regeler das Verfahren nach einem der Ansprüche 10 bis 13 ausführt.

## Revendications

1. Équipement (1) pour cerf-volant, comprenant :
un système de contrôle comprenant au moins un élément de contrôle aérodynamique (20, 21)
dans le cerf-volant ou couplé à celui-ci, destiné à contrôler de manière aérodynamique au moins certains aspects du vol du cerf-volant ;
un raccord de fixation (15b) destiné à raccorder le cerf-volant à une attache (3) ; et
un système d'extraction d'énergie (10) comprenant un accouplement mécanique à une voile (6) du cerf-volant et un générateur (13), le système de contrôle étant conçu pour contrôler la voile de manière à engendrer un mouvement alternatif de l'accouplement mécanique à la voile par rapport au raccord de fixation et le générateur étant conçu pour extraire l'énergie produite par ledit mouvement alternatif,
**caractérisé en ce que**
le système de contrôle est conçu pour contrôler le cerf-volant de manière à engendrer un mouvement alternatif de la voile du cerf-volant par rapport au raccord de fixation afin d'engendrer le mouvement alternatif de l'accouplement mécanique.

2. Équipement selon la revendication 1, dans lequel au moins l'un des éléments de contrôle aérodynamiques comprend un élément destiné à modifier la forme de la voile et/ou une surface de contrôle aérodynamique et/ou un dispositif de freinage aérodynamique.

3. Équipement selon l'une quelconque des revendications précédentes, dans lequel le système de contrôle comprend un premier système de contrôle (8), l'équipement comprenant en outre un deuxième système de contrôle (9) conçu pour contrôler indépendamment le vol du cerf-volant, le deuxième système de contrôle comprenant un moyen (13) de
mise en prise avec l'accouplement mécanique afin d'exercer une force mécanique sur l'accouplement mécanique de manière à contrôler le vol du cerf-volant.

4. Équipement pour cerf-volant selon la revendication 3, dans lequel le moyen de mise en prise comprend le générateur et la force mécanique exercée sur l'accouplement mécanique est la résistance au mouvement alternatif de l'accouplement mécanique engendré par le générateur.

5. Équipement selon la revendication 3, dans lequel le moyen de mise en prise comprend un moteur (13).

6. Équipement selon la revendication 3 ou 5, comprenant un moteur/générateur (13), fournissant le générateur du système d'extraction d'énergie ainsi que le moyen de mise en prise.

7. Équipement pour cerf-volant selon l'une quelconque des revendications précédentes, comprenant en outre un système de stockage d'énergie (14) conçu pour stocker l'énergie extraite par ledit système d'extraction d'énergie et pour alimenter le système de contrôle en utilisant l'énergie stockée.

8. Équipement selon l'une quelconque des revendications précédentes, comprenant en outre un dispositif de commande (15) destiné à commander le système de contrôle et le système d'extraction d'énergie et un système de capteur voisin de la voile du cerf-volant destiné à recueillir des informations relatives au vol du cerf-volant destinées à être utilisées par le dispositif de commande.

9. Cerf-volant comprenant :
un équipement selon l'une quelconque des revendications précédentes ; et une voile (6).

10. Procédé de contrôle d'un cerf-volant comprenant une voile (6) afin d'extraire de l'énergie du vent soufflant localement au niveau du cerf-volant à l'aide d'un
équipement (1) comprenant :
un système de contrôle comprenant au moins un élément de contrôle aérodynamique (20, 21) dans le cerf-volant ou couplé à celui-ci, destiné à contrôler de manière aérodynamique au moins certains aspects du vol du cerf-volant ;
un raccord de fixation (15b) destiné à raccorder le cerf-volant à une attache (3) ; et
un système d'extraction d'énergie comprenant un accouplement mécanique à la voile et un générateur (13), le procédé comprenant les étapes consistant à :
utiliser le système de contrôle pour contrôler la voile de manière à engendrer un mouvement alternatif de l'accouplement mécanique à la voile par rapport au raccord de fixation, et
à l'aide du générateur, extraire l'énergie produite par le mouvement alternatif de l'accouplement mécanique à la voile par rapport au raccord de fixation.

11. Procédé selon la revendication 10, dans lequel le
système comprend en outre un stockage d'énergie (14) et le procédé comprend en outre :
le stockage de l'énergie extraite, et
l'utilisation de l'énergie stockée pour contrôler le vol du cerf-volant.

12. Procédé selon la revendication 11, dans lequel le système de contrôle fournit un premier système de contrôle (8) et l'équipement comprend en outre un deuxième système de contrôle (9), conçu
pour contrôler indépendamment au moins certains aspects du vol de la voile du cerf-volant, comprenant un moyen de mise en prise avec l'accouplement mécanique, le procédé comprenant en outre :
la manipulation, à l'aide du moyen de mise en prise du deuxième système de contrôle, de l'accouplement mécanique pour qu'il bouge par rapport au raccord de fixation de manière à contrôler le vol du cerf-volant.

13. Procédé selon la revendication 12, dans lequel l'équipement comprend un moteur/générateur fournissant ledit moyen de mise en prise et ledit générateur, le procédé comprenant l'étape consistant à utiliser de manière sélective le moteur/générateur comme moyen de mise en prise afin de manipuler mécaniquement l'accouplement mécanique à la voile par rapport au raccord de fixation ou comme générateur destiné à extraire l'énergie produite par le mouvement alternatif de l'accouplement mécanique par rapport au raccord de fixation quand le premier système de contrôle est utilisé pour contrôler au moins certains aspects du vol du cerf-volant.

14. Programme informatique comprenant des instructions qui, lorsqu'elles sont exécutées par un dispositif de commande, entraînent l'exécution, par le dispositif de commande, du procédé selon l'une quelconque des revendications 10 à 13.
